# EUROPEAN PATENT APPLICATION

(11) **EP 3 115 596 A1**
(43) Date of publication of application: **11.01.2017**
(21) Application number: 15176295.2
(22) Date of filing: 10.07.2015
(51) Int. Cl.: F03D 1/06, F03D 3/06

(54) **LIFT MODIFYING DEVICE FOR A ROTOR BLADE FOR A WIND TURBINE**

(71) Applicant: Siemens Aktiengesellschaft, 80333 München (DE)
(72) Inventor: Gonzalez, Alejandro Gomez, 8000 Aarhus (DK); Loeven, Alex, 7400 Herning (DK); Torgard, Sigmund Wenningsted, 7000 Fredericia (DK)

(57) **Abstract**

The invention relates to a lift modifying device (30) for a rotor blade (20) for a wind turbine (10), wherein the lift modifying device (30) comprises a first surface portion (31) and at least a second surface portion (32). The lift modifying device (30) is arranged and prepared for being attached to the pressure side (252) of the rotor blade (20) by the first surface portion (31). The pressure side (252) of the rotor blade (20) is modified by the attached lift modifying device (30) such that the camber of the rotor blade (20) is reduced. The invention furthermore relates to a rotor blade (20) for a wind turbine (10) with such a lift modifying device (30).

## Description

The present invention relates to a lift modifying device for a rotor blade for a wind turbine. Furthermore, it relates to a rotor blade for a wind turbine with such a lift modifying device.

Wind turbine rotor blades are typically designed for optimum performance at a specific combination of wind speed, rotor speed, and generator rated power. This means that each airfoil section of the rotor blade is designed to operate at a given condition. More specifically, each airfoil section is optimized regarding a given angle of attack and a given lift coefficient.

In practice, however, deviations from these operational conditions for which the design of the rotor blade has been optimized might occur. These deviations include changes in the main wind turbine parameters, such as rotor speed, rated power, pitch angles, etc. Other deviations include specific local site conditions regarding the site where the specific wind turbine is installed. Yet another example why a rotor blade may in practice deviate from the design operational conditions are aerodynamic changes, in which elements are retrofitted to the rotor blade, such as a flap.

Consequently, there might arise the requirement or the desire to modify the design of a rotor blade. In particular, it may be advantageous, or even necessary, to modify the design of the rotor blade such that the lift of some airfoil sections of the rotor blade is reduced in a certain range of angles of attack.

Such a modification of the lift of some airfoil sections of the rotor blade is in principle possible by modifying the shape of said airfoil sections, for example by modifying the mold by which the rotor blade is being manufactured. However, such a modification is generally complex and costly. Furthermore, if a certain rotor blade needs to be modified in a very specific manner, it is not efficient to specifically provide a separate mold. Also in the case that an already existing and already operating rotor blade needs to be modified, alternative ways of modifying the lift of the rotor blade are helpful.

Several approaches for modifying the lift of a rotor blade have been disclosed and discussed in the literature until now.

One approach is the provision of flap-like add-ons to the rotor blade for modifying the lift within a certain range of angles of attack. For the particular case of reducing the lift, a flap which is directed and bent towards the suction side of the rotor blade might provide the desired effect of lowering the lift coefficient. An example of such a device is a so called reverse Gurney flap. A drawback of this approach is the increase of drag, having a negative impact on the lift to drag ratio of the rotor blade, thus on the overall performance of the wind turbine. A further example is a flap extension of the rotor blade where the extension is deflected from the pressure side towards the suction side. A drawback of this approach is that by extending the chord, the extreme and fatigue loads of the platform may increase.

Another approach of modifying, in particular reducing, the lift of the rotor blade has been disclosed in the patent application US 2009/0226324 A1. Therein, a so called stall strip which is shaped for reducing the negative lift coefficient is applied on the pressure side of the rotor blade. A drawback of this approach is that it does not reduce the lift in the operating envelope of the airfoil, but only in extreme situations. I.e., the lift at the operating angles of attack is not reduced, but only the absolute magnitude of the minimum lift coefficient is reduced.

Yet another approach of modifying the lift coefficient of the rotor blade is the provision of active flaps, such as e.g. disclosed in the patent application EP 2,405,129 A1. Therein a so called displacement device which is configured to displace a pressure side point and a suction side point is arranged close to the trailing edge of the rotor blade such that the distance between the suction side point and the pressure side point can be varied. This allows a local manipulate of the lift coefficient of the rotor blade in a customized manner. In the cited patent application an active mechanism comprising an actuator unit is disclosed in order to specifically control the displacement device. Such an example for an active flap in order to modify the lift coefficient of the rotor blades has, though, the drawbacks of servicing requirements, potential failure and installation costs correlated to such a relatively complex system.

Thus, there exists the desire of providing a concept how to modify the lift coefficient, in particular to reduce the lift coefficient of a rotor blade for a wind turbine in a simple and efficient manner.

This objective is achieved by the independent claims. Advantageous embodiments and modifications are described in the dependent claims.

According to the invention there is provided a lift modifying device for a rotor blade for a wind turbine, wherein the lift modifying device comprises a first surface portion and at least a second surface portion. The lift modifying device is arranged and prepared for being attached to the pressure side of the rotor blade by the first surface portion in at least some spanwise extension of the blade. More specifically, the lift modifying device is arranged and prepared for being attached at least partially at the trailing edge section of the rotor blade. Furthermore, the pressure side of the rotor blade is modified by the attached lift modifying device such that the cambers of the airfoils of the rotor blade in the section of the rotor blade with the modified pressure side are reduced.

As a consequence, the lift coefficients of the airfoils in the section of the rotor blade with the modified pressure side are reduced.

An airfoil refers to the shape of the rotor blade as seen in a cross-sectional view. The cross-sectional view is taken perpendicular to the span, i.e. perpendicular to the spanwise direction of the rotor blade.

The trailing edge section of the rotor blade refers to the part of the rotor blade comprising the chordwise section between 80% and 100% of the chord length, wherein the chord length is measured from the leading edge of the rotor blade. In other words, the trailing edge section refers to the 20% chordwise section upstream of the trailing edge of the rotor blade.

The "cambers of the airfoil" refer to the - generally varying - value of the camber at different chordwise positions of the airfoil. As it is well known to the person skilled in the art, the camber of an airfoil generally depends on the chordwise position. The "cambers of the airfoil" thus have to be understood as the different camber values at different chordwise positions.

Note that according to the invention the lift modifying device is destined for being attached at chordwise positions which at least partially fall into the section being defined as the trailing edge section of the rotor blade (or airfoil, respectively). Exemplarily, the lift modifying device is destined for being attached to the chordwise section between 50% and 100% of the chord length as measured from the leading edge. Alternatively, the lift modifying device may also be destined for being attached to the chordwise section between 80% and 90% of the chord length. To give a further example, a lift modifying device which is arranged and prepared for being attached to the chordwise section between 50% and 70% of the chord length as measured from the leading edge would not fall under the scope of protection as claimed in claim 1 of this patent application.

A consequence of the fact that the camber is reduced in the trailing edge section of the airfoil, the lift coefficient of the airfoil is reduced as well.

Note that even if the lift coefficients of the airfoils of a certain part of the rotor blade are reduced, the overall lift coefficient of the rotor blade may in principle either be reduced, increased or remain constant. An increase of the overall lift coefficient of a rotor blade comprising a lift modifying device at the pressure side in a certain spanwise extension according to the invention would, however, necessitate other measures to be taken. Examples of these measures are well known to the person skilled in the art and include the provision of flaps, channels for deviating an airflow, and the like. These lift increasing devices are preferably provided at another section of the rotor blade than the lift modifying device of this invention.

The camber of an airfoil characterizes the asymmetry between the top surface and the bottom surface of the airfoil. As the airfoils of a rotor blade for a wind turbine are typically shaped as a lift-generating profile, wherein the "top surface" is referred to as the suction side and the "bottom surface" is referred to as the pressure side, the camber may also be described as characterizing the asymmetry between the suction side and the pressure side of the airfoil. An airfoil that is not cambered is called a symmetric airfoil, while an airfoil that is cambered is referred to as an asymmetric airfoil. In general, the benefits of a cambered airfoil, in contrast to symmetric airfoils, is the increase of the lift coefficient, as well as the increase of the gliding number, which expresses the ratio of the lift coefficient to the drag coefficient.

The following definitions are used throughout this application:
The chord line is referred to as the straight line connecting the leading edge of the rotor blade and the trailing edge of the rotor blade.
The chord length is the length of the chord line.

The shape of the airfoil is defined inter alia by the camber. The camber line, which is also called the mean camber line, or sometimes called the skeleton line, is the locus of points midway between the pressure side and the suction side. Thus, it is a measure of the asymmetry of the airfoil.

The distance between the camber line and the chord line determines the value of the camber. This is not a global value for an airfoil but depends on the chordwise position of the airfoil.

The maximum camber signifies the maximum value of the camber for all chordwise positions of an airfoil. Note that the distance is taken perpendicular to the chord line.

Furthermore, the thickness of the airfoil is also given in dependency of the chordwise position and is measured perpendicular to the camber line, thus referring to the distance between the suction side and the pressure side. A maximum thickness as the value signifying the maximum distance between the suction side and the pressure side can be determined.

In general, an airfoil with small camber has less lift, i.e. has a smaller lift coefficient, as an airfoil with a large camber. As conventional rotor blades for a wind turbine often have a pronounced camber at least within a certain spanwise extension of the rotor blade, by smoothening the camber in this region, the lift coefficient of the rotor blade might be reduced. The smoothening can be understood as the reduction of the asymmetry of the airfoil, i.e. the reduction of the difference between the distance between the camber line and the chord line.

A key aspect of the present invention is that this smoothening of the cambered airfoil is carried out by attaching a lift modifying device to the pressure side of the airfoil in a certain spanwise portion of the rotor blade. This generally reduces the camber of the airfoils in that section of the rotor blade where the lift modifying device is attached to the original rotor blade and thus modifies the lift coefficient of the airfoils in that section. In particular, it is well suited to reduce the lift coefficient locally.

In contrast to conventional approaches of modifying the lift coefficient of the rotor blade, by attaching the lift modifying device to the pressure side of the rotor blade according to the invention, the drag of the rotor blade is generally not increased. It may even be the case that the drag force on the airfoil is reduced by attaching the lift modifying device to the pressure side of the rotor blade. Thus, the lift to drag ratio, which is a measure for the efficiency and the performance of the rotor blade, is not penalized.

An advantage of the present invention is that the lift coefficient of the rotor blade may be modified individually in a simple and cost-efficient manner. It is a simple concept of modifying the lift as it only involves attaching the lift modifying device, which as such can be prefabricated, to the pressure side of the rotor blade. The attachment of the lift modifying device to the pressure side of the rotor blade can be carried out at the manufacturing site where the rotor blade is manufactured, at the installation site where the wind turbine is installed, or even at a mounted rotor blade. In the latter case, consequently the rotor blade does not need to be dismounted in order to attach the lift modifying device to the pressure side of the rotor blade.

Additionally, the present concept is an efficient and inexpensive method as no modifications during the manufacturing process and, in particular, during provision of the mold have to be carried out. Thus, standard molds can be continued to be used and the camber of the rotor blade is modified solely by attaching the lift modifying device at the pressure side on the completely manufactured rotor blade.

In an advantageous embodiment of the invention, the lift modifying device is used for reducing the overall lift coefficient of the rotor blade.

In another advantageous embodiment of the invention, the camber of at least one airfoil of the modified rotor blade is reduced in at least one chordwise position by at least five per cent, in particular by at least fifteen per cent of the camber of the unmodified rotor blade at the respective chordwise position.

In other words, in order to ensure a significant impact of the lift modifying device on the lift coefficient of the rotor blade, the camber of the modified rotor blade is advantageously reduced by at least the values mentioned above. These values do not need to be reached for the whole chordwise range at which the lift modifying device is applied on, but shall advantageously be reached for at least one chordwise position.

In another advantageous embodiment of the invention, for at least one airfoil of the modified rotor blade the pressure side is modified by the attached lift modifying device such that the maximum camber of the at least one airfoil with the modified pressure side is reduced. In particular, the maximum camber of the modified rotor blade is reduced by at least 5 %, in particular by at least 15 % of the original maximum camber.

The maximum camber is defined as being the value of the camber which has the maximum value of the various camber values at the various chordwise positions between the leading edge of the rotor blade and the trailing edge of the rotor blade. By reducing the maximum camber by 5 % or even more, a considerable modification of the lift coefficient of the airfoil, in particular a considerable reduction of the local lift coefficient can be achieved.

In another advantageous embodiment, the lift modifying device is flexible such that fitting the lift modifying device to the pressure side of the rotor blade is facilitated. In other words, a good fit of the lift modifying device with the rotor blade is easier to achieve compared to a rigid and stiff lift modifying device.

Furthermore, by using a flexible lift modifying device, it is possible to use the same lift modifying device in a large spanwise portion of the rotor blade, even if significant variation of the geometry and shape of the rotor blade in the mentioned spanwise portion of the rotor blade exists. In other words, it is possible that the lift modifying device clings favorably to the surface of the rotor blade.

A further advantage of the flexible lift modifying device is that the lift modifying device is able to elastically deform together with the rotor blade in operation without attracting load onto itself. Thus, the lift modifying device which is flexible and which deforms together with the rotor blade is not interfering or disturbing the bending of the rotor blade under certain operational conditions.

As an example, the lift modifying device may be made of rubber and/or silicone. As another example the lift modifying may be made of molded plastic. These materials are advantageous as they are inexpensive and readily available.

Advantageously, the lift modifying device is attached to the pressure side of the rotor blade by means of an adhesive. Exemplarily, the lift modifying device is attached to the pressure side of the rotor blade by means of a pressure sensitive tape being coated with an adhesive on both sides. The latter is also referred to as a double-sided tape.

These methods of attaching the lift modifying device to the pressure side of the rotor blade is well known from the attachment of other aerodynamic devices such as flaps, vortex generators or spoilers to the rotor blade. Note that the attachment has to withstand harsh conditions and has to be reliable such that the lift modifying device shall not be able to fall apart and damage the surroundings of the wind turbine.

The invention is further directed towards a rotor blade for a wind turbine with a lift modifying device as described above.

Preferably, the lift modifying device has a spanwise extension of at least 5 %, in particular of at least 15 % of the total length of the rotor blade.

The total length of the rotor blade refers to the distance between the root of the rotor blade and the tip of the rotor blade. Attaching the lift modifying device over a spanwise extension of at least 10 % ensures a significant impact of the local lift coefficient modifications to the global lift coefficient of the whole rotor blade.

In an advantageous embodiment, the lift modifying device is placed in the midspan section of the blade, this means in a region between 20% and 70% of the span. An advantage of placing the lift modifying device at this portion of the rotor blade is that therein the lift modification has a particularly strong potential for reducing aerodynamic loads, without strongly impacting the aerodynamic performance of the rotor blade.

In another advantageous embodiment, the lift modifying (reducing) device is placed in the midspan section of the blade, between 20% and 70% of the span, preferably between 30% and 60% of the span, combined with a lift modifying (increasing) device in the outboard section of the blade (span >70%).

In another advantageous embodiment, the lift modifying device has a chordwise extension of at least 10 %, in particular of at least 25 % of the local chord length of the rotor blade.

Note that the lift modifying device may advantageously be located close to the trailing edge of the rotor blade. Thus a chordwise extension from approximately the trailing edge towards the leading edge of at least 10 % represents a preferred design choice for the lift modifying device.

In another advantageous embodiment, the lift modifying device is segmented into a plurality of sub-units in spanwise direction of the rotor blade.

The advantage of providing several sub-units in spanwise direction is that loading of the lift modifying device is reduced. This is particularly valid if the rotor blade is designed to considerably bend in flapwise or edgewise direction. Another advantage of providing a segmented lift modifying device is ease of manufacturing and transportation of the lift modifying device.

Embodiments of the invention are now described, by way of example only, with reference to the accompanying drawings, of which:
Figure 1 shows a rotor blade of a wind turbine;
Figure 2 shows an airfoil of a rotor blade;
Figure 3 shows a modified airfoil of a rotor blade comprising a lift modifying device;
Figure 4 shows two curves of the lift coefficient depending on the angle of attack;
Figure 5 shows the attachment of a lift modifying device to a rotor blade; and
Figure 6 shows a rotor blade with a lift modifying device in a perspective view.

The illustration in the drawings is in schematic form. It is noted that in different figures, similar or identical elements may be provided with the same reference signs.

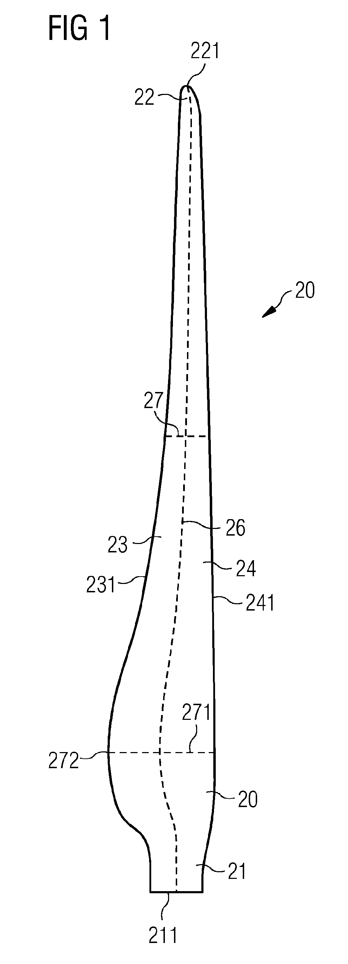

Figure 1 shows a rotor blade 20 of a wind turbine. The rotor blade 20 comprises a root section 21 with a root 211 and a tip section 22 with a tip 221. The root 211 and the tip 221 are virtually connected by the span 26 which follows the shape of the rotor blade 20. If the rotor blade were a rectangular shaped object, the span 26 would be a straight line. However, as the rotor blade 20 features a varying thickness, the span 26 is slightly curved or bent as well. Note that if the rotor blade 20 was bent itself, then the span 26 would be bent, too.

The rotor blade 20 furthermore comprises a leading edge section 24 with a leading edge 241 and a trailing edge section 23 with a trailing edge 231.

The trailing edge section 23 surrounds the trailing edge 231. Likewise, the leading edge section 24 surrounds the leading edge 241.

At each spanwise position, a chord line 27 which connects the leading edge 241 with the trailing edge 231 is defined. Note that the chord line 27 is perpendicular to the span 26. The shoulder 272 is defined as the region where the chord line 27 comprises a maximum chord length 271.

Furthermore, the rotor blade 20 can be divided into an inboard section which comprises the half of the rotor blade 20 adjacent to the root section 21 and an outboard section which comprises the half of the rotor blade 20 which is adjacent to the tip section 22. The inboard section is also referred to as the inner half, while the outboard section is also referred to as the outer half.

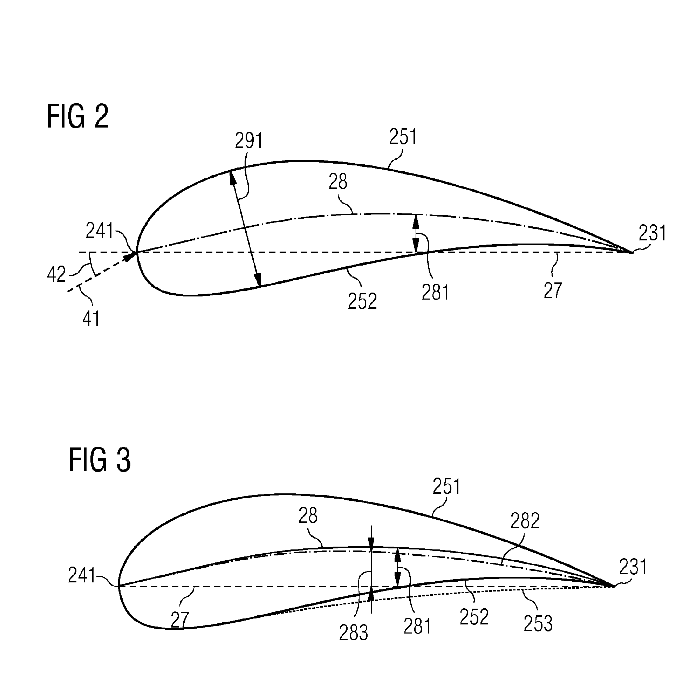

Figure 2 shows an airfoil of a cambered rotor blade. Figure 2 visualizes the characteristic terms related to airfoils and rotor blades used in this patent application. An airfoil refers to a cross-sectional view of a rotor blade. Thus, a rotor blade comprises a plurality of airfoils, as each airfoil is taken at a specific spanwise position of the rotor blade.

The airfoil comprises a leading edge 241 and a trailing edge 231. In the case of the airfoil of figure 2, which is an example of a typical airfoil of a rotor blade of a wind turbine, the leading edge 241 has a rounded shape, while the trailing edge 231 has a sharp edge. Alternatively the trailing edge 231 can be a flat line substantially perpendicular to the chord line as is the case for flatback airfoils The straight line which connects the leading edge 241 with the trailing edge 231 is referred to as the chord line 27. The part above the chord line 27 is referred to as the suction side 251, while the other part, which is the bottom part in figure 2, is referred to as the pressure side 252. The camber line 28 is referred to and defined by all points being midway between the suction side 251 and the pressure side 252. If the rotor blade was completely symmetric, the chord line and the camber line would coincide. For asymmetric airfoils, the chamber line differs from the chord line. This difference is referred to as the camber of the airfoil. The camber thus has a specific value depending on the chordwise position of the airfoil. The maximum value of the camber is referred to as the maximum camber 281. The thickness of the airfoil is determined at each chordwise position by the distance between the suction side 251 and the pressure side 252 perpendicular to the camber line 28 ("American Convention"). The maximum value of the thickness is referred to as the maximum thickness 291 of the airfoil. Further note that the angle of attack 42 is defined as the angle between the direction of the relative wind 41 and the chord line 27.

Figure 3 illustrates the impact of a lift modifying device being attached to a rotor blade. In particular, figure 3 shows a modified airfoil, namely the airfoil of a rotor blade being modified by a lift modifying device. The camber line of the original airfoil, which has been illustrated as the dash-dotted line 28 in figure 2, is illustrated as a solid line 28 in figure 3. The camber line of the modified airfoil, which is referred to as the modified camber line 282, is shown as a dash-dotted line in figure 3. The pressure side 252 of the original rotor blade is shown as a solid line, while the pressure side of the modified airfoil, which is referred to as the modified pressure side 253, is illustrated as a dotted line in figure 3. It can be seen that the influence of the lift modifying device is such that the camber of the modified airfoil is smaller for all chordwise positions where the lift modifying device is attached to the original rotor blade. In other words, the camber is shallower at the modified airfoil compared to the original airfoil. This is in particular valid for the maximum camber which can be seen by comparing the maximum camber 281 of the original airfoil with the modified maximum camber 283 of the modified airfoil.

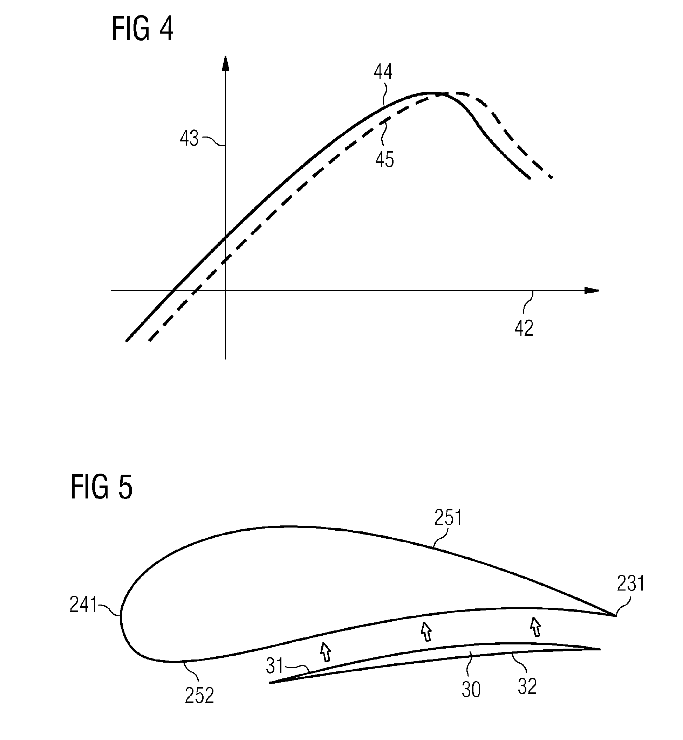

The impact of the attachment of the lift modifying device on the rotor blade and thus the impact of the modified camber can be seen in figure 4. A consequence of the modified camber, in particular of the reduced camber, is a modification of the lift curve, wherein the lift curve refers to the lift coefficient 43 depending on the angle of attack 42. A first curve 44 in figure 4 refers to the lift curve of the original airfoil as shown in figure 2. By contrast, the second curve 45 in figure 4 refers to the lift curve of the modified airfoil shown by the modified pressure side 253 in figure 3. It can be seen that, in this example, the maximum lift coefficient remains approximately the same, but is now achieved at higher angle of attacks. In other words, the whole lift curve is shifted towards higher angles of attack 42 in the second curve 45 compared to the first curve 44. Note, however, that in principle, the maximum lift coefficient may remain approximately the same or may also be lowered.

Figure 5 shows the attachment of a lift modifying device 30 comprising a first surface portion 31 and a second surface portion 32 to a rotor blade. The lift modifying device 30 is attached to the pressure side 252 of the rotor blade in a chordwise extension of approximately 60 %. The lift modifying device 30 is attached from the trailing edge 231 towards the leading edge 41. It is mainly located in the trailing edge section and towards the leading edge of the rotor blade. The lift modifying device 30, in particular the first surface portion 31 of the lift modifying device 30, is designed such that it fits to the shape of the pressure side 252 in the region where the lift modifying device is destined being attached to. This can be achieved by carefully fabricating and designing the lift modifying device 30 or by providing a flexible lift modifying device 30 which is able to adapt within certain ranges to the shape of the pressure side 252.

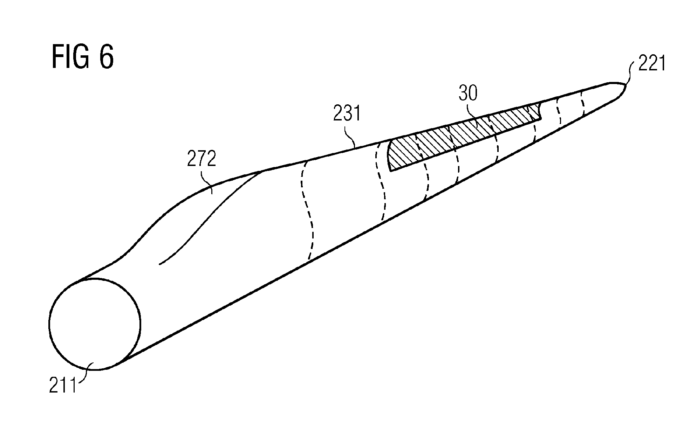

Finally, figure 6 shows a perspective view of a rotor blade comprising a lift modifying device 30. Note that the dashed lines in figure 6 refer to the cross-sectional pressure sidelines and visualize how the pressure side changes from a pronounced curvature close to the shoulder 272 of the rotor blade while being less curved and thus less cambered in the area where the lift modifying device 30 is attached to the rotor blade. In other words, the impact of the lift modifying device making the airfoil of the rotor blade less cambered, i.e. more symmetrical, is illustrated by the set of dashed lines perpendicular to the spanwise direction in figure 6.

## Claims

1. Lift modifying device (30) for a rotor blade (20) for a wind turbine (10),
wherein
- the lift modifying device (30) comprises a first surface portion (31) and at least a second surface portion (32),
- the lift modifying device (30) is arranged and prepared for being attached to the pressure side (252) of the rotor blade (20) by the first surface portion (31)
- the lift modifying device (30) is arranged and prepared for being attached at least partially at the trailing edge section (23) of the rotor blade (20), and
- the pressure side (252) of the rotor blade (20) is modified by the attached lift modifying device (30) such that the cambers of the airfoils of the rotor blade (20) in the section of the rotor blade (20) with the modified pressure side (253) are reduced.

2. Lift modifying device (30) according to claim 1,
wherein the camber of at least one airfoil of the modified rotor blade is reduced in at least one chordwise position by at least five per cent, in particular by at least fifteen per cent of the camber of the unmodified rotor blade at the respective chordwise position.

3. Lift modifying device (30) according to one of the preceding claims,
wherein for at least one airfoil of the modified rotor blade the pressure side (252) is modified by the attached lift modifying device (30) such that the maximum camber of the at least one airfoil with the modified pressure side (253) is reduced.

4. Lift modifying device (30) according to claim 3,
wherein the maximum camber of the at least one airfoil of the modified rotor blade is reduced by at least five per cent, in particular by at least fifteen per cent of the maximum camber of the unmodified rotor blade.

5. Lift modifying device (30) according to one of the preceding claims,
wherein the lift modifying device (30) is flexible such that fitting the lift modifying device (30) to the pressure side (252) of the rotor blade (20) is facilitated.

6. Lift modifying device (30) according to claim 5,
wherein the lift modifying device (30) is made of rubber and/or silicone.

7. Lift modifying device (30) according to one of the claims 1 to 4,
wherein the lift modifying device (30) is made of molded plastic.

8. Lift modifying device (30) according to one of the preceding claims,
wherein the lift modifying device (30) is attached to the pressure side (252) of the rotor blade (20) by means of an adhesive.

9. Lift modifying device (30) according to claim 8,
wherein the lift modifying device (30) is attached to the pressure side (252) of the rotor blade (20) by means of a pressure-sensitive tape being coated with an adhesive on both sides.

10. Rotor blade (20) for a wind turbine (10) with a lift modifying device (30) according to one of the preceding claims.

11. Rotor blade (20) according to claim 10,
wherein the lift modifying device (30) has a spanwise extension of at least five per cent, in particular of at least fifteen per cent of the total length of the rotor blade (20).

12. Rotor blade (20) according to one of the claims 10 or 11, wherein the lift modifying device (30) is located between 20% and 90% of the span (26) of the rotor blade (20), preferably between 30% and 70%, or between 40% and 70%.

13. Rotor blade (20) according to one of the claims 10 to 12, wherein the lift modifying device (30) has a chordwise extension of at least ten per cent, in particular of at least twenty-five per cent of the local chord length for at least one airfoil of the modified rotor blade.

14. Rotor blade (20) according to one of the claims 10 to 13, wherein the lift modifying device (30) is segmented into a plurality of sub-units in spanwise direction of the rotor blade (20).
